# EUROPÄISCHE PATENTSCHRIFT

(11) **EP 1 253 725 B1**
(45) Veröffentlichungstag und Bekanntmachung des Hinweises auf die Patenterteilung: **13.12.2006**
(21) Anmeldenummer: 02004465.7
(22) Anmeldetag: 27.02.2002
(51) Int. Cl.: H04B 3/54

(54) **Verfahren zur Datenübertragung und Vorrichtung dazu**
Method for data transmission and device therefor
Procédé pour la transmission de données et appareil associé

(30) Priorität: 26.04.2001 DE 10120466
(43) Veröffentlichungstag der Anmeldung: 30.10.2002
(73) Patentinhaber: ROBERT BOSCH GMBH, 70442 Stuttgart (DE)
(72) Erfinder: Kramp, Wolfgang, 71254 Ditzingen (DE); Wagner, Arndt, 71735 Eberdingen (DE); Spichale, Thomas, 69436 Schoenbrunn (DE)

(56) Entgegenhaltungen:
- WO-A-01/45995
- WO-A-97/23056
- DE-A- 3 723 737
- US-A- 6 111 963

## Beschreibung

### Stand der Technik

Die Erfindung geht aus von einem Verfahren zur Datenübertragung in einem Fahrzeug nach der Gattung des Hauptanspruchs. Es sind schon Verfahren zur Datenübertragung in einem Fahrzeug bekannt, bei denen verschiedene Geräte über einen gesonderten Datenbus miteinander verbunden sind und über diesen Datenbus Daten austauschen. Aus der DE 196 31 694 A1 ist eine Distanzmessung für Kraftfahrzeuge bekannt, bei der in einem Anhänger eines Lastkraftwagens oder Personenkraftwagens ein Abstandssensor angeordnet ist. Die Signale des Abstandssensors werden mittels eines Modulators auf eine Gleichspannungsversorgungsleitung des Anhängers gegeben. Mittels eines Demodulators werden die Hochfrequenzsignale an anderer Stelle im Fahrzeug demoduliert und eine Abstandswarnung wird zur Anzeige gebracht.

Aus der DE 37 23 737 A1 ist ein Wiedergabegerät für stereophonische Signale bekannt. Die Übertragung dieser Signale von einer Verarbeitungseinheit zu den Boxen erfolgt auf wenigstens einem Teil des Weges über eine auf eine elektrische Netzleitung aufmodulierte Trägerfrequenz.

### Vorteile der Erfindung

Die Erfindung mit den Merkmalen des Hauptanspruchs hat demgegenüber den Vorteil, dass für eine Datenübertragung Signalleitungen einer Audiosignalquelle zu einem Lautsprecher ausgenutzt werden, um Ansteuerungssignale über diese Audioleitungen zu übertragen. Signalleitungen zur Übertragung von Audiosignalquellen sind als Wechselstromleitungen ausgeführt, die im Allgemeinen abgeschirmt sind, so dass eine sicherere und störungsfreie Übertragung erfolgt. Im Gegensatz zu einer Datenübertragung über eine niederohmige Gleichspannungsleitung, die insbesondere zur Vermeidung einer Einkopplung von Störungen eine hohe Frequenz für die Übertragung des Steuersignals erfordert, kann über eine Wechselstromleitung ein Steuersignal auch mit einer niedrigen Frequenz übertragen werden. Hierdurch wird auch eine Abstrahlung möglicherweise andere Geräte störender elektromagnetischer Strahlung vermieden. Ferner werden Lautsprecheranschlüsse insbesondere auch in ansonsten für die Anbringung von elektrischen Zuleitungen schwer zugängliche Teile des Fahrzeugs verlegt, z.B. in die Fahrzeugtüren. Indem die Signalleitungen, die zu den Lautsprechern führen, ausgenutzt werden, kann auf eine Anordnung zusätzlicher Leitungen für die Ansteuerung einer elektrischen Vorrichtung mittels eines Datensignals verzichtet werden.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, Audiosignale und Steuersignale gleichzeitig auf die Signalleitungen zu geben. Insbesondere ist dabei vorteilhaft, mit einer Frequenzweiche das Signal auf die Signalleitung zu geben und das Steuersignal ebenfalls mit einer Frequenzweiche wieder von der Signalleitung abzugreifen. Hierdurch ist insbesondere bei einer Wechselstromleitung ein Abgreifen des Steuersignals möglich, ohne das eigentliche Nutzsignal, hier das Audiosignal, störend zu beeinflussen, sofern die Frequenzbereiche entsprechend angepasst sind und sich die Frequenzbereiche für die Audiosignale nicht mit den Frequenzbereichen für die Steuersignale überschneiden. Hierzu ist insbesondere vorteilhaft, den Frequenzbereich für die Übertragung der Steuersignale in einem nicht hörbaren Frequenzbereich vorzusehen, insbesondere in einem Frequenzbereich über 40 kHz, z.B. mindestens mit einer doppelten Frequenz der maximal auftretenden Frequenz des Audiosignals. Ferner ist auch eine Übertragung in einem sehr niedrigen Frequenzbereich kleiner 10 Hz bzw. eine Übertragung der Steuersignale in einem Frequenzbereich kleiner 100 Hz möglich, sofern eine niedrige Amplitude gewählt wird.

Weiterhin ist vorteilhaft, dass das Steuersignal von der Audiosignalquelle erzeugt wird. Hierdurch kann auf eine zusätzliche Einrichtung für eine Signalerzeugung verzichtet werden. Ferner ist möglich, die Audiosignalquelle auch zur Steuerung als eine Benutzerschnittstelle einzusetzen, so dass die Audiosignalquelle, z.B. ein Autoradio, zur Bedienung der anzusteuernden Geräte genutzt wird. Hierdurch können Bedieneinheiten der Audiosignalquelle mitbenutzt werden.

### Zeichnung

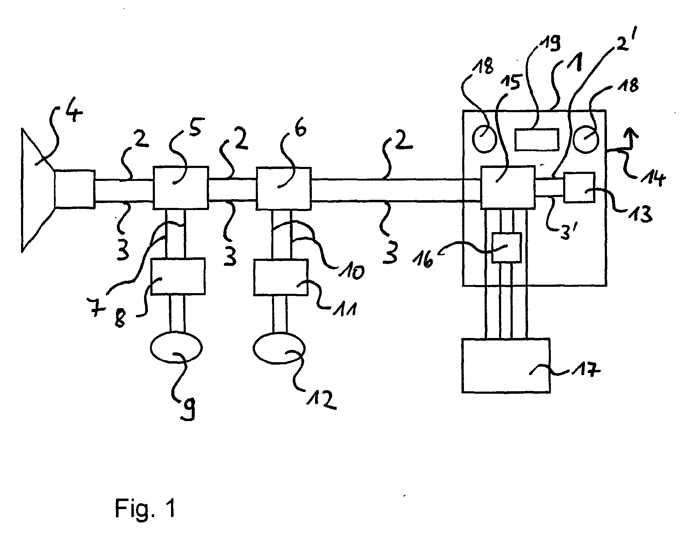

Ein Ausführungsbeispiel der Erfindung ist in der Zeichnung dargestellt und in der nachfolgenden Beschreibung näher erläutert. Figur 1 zeigt eine erfindungsgemäße Vorrichtung zur Durchführung des Verfahrens, anhand der das erfindungsgemäße Verfahren erläutert wird.

### Beschreibung des Ausführungsbeispiels

Die vorliegende Erfindung kann in beliebigen Fahrzeugen, so z.B. Bahnen, Schiffen und Kraftfahrzeugen verwendet werden. Im Folgenden wird das erfindungsgemäße Verfahren anhand der Verwendung in einem Kraftfahrzeug erläutert. Hierbei kann als eine Audiosignalquelle ein beliebiges Gerät zur Sprach- und Musikerzeugung verwendet werden, dessen Ausgangssignale auf einen Lautsprecher ausgegeben werden, so z.B. eine Vorrichtung, die auf einem Datenträger gespeicherte Musik wiedergibt, eine Sprachausgabevorrichtung eines elektrischen Geräts oder ein Autoradio. Die Audiosignalquelle kann als einzelnes Gerät im Fahrzeug angeordnet oder in eine Fahrerinformationsvorrichtung integriert sein, die noch weiteren Funktionen dient, so z.B. einer Navigation eines Fahrzeugs in einem Straßennetz oder der Herstellung einer Funkverbindung, insbesondere einer Mobiltelefonverbindung.

Im Folgenden wird das erfindungsgemäße Verfahren unter Verwendung einer Autoradiovorrichtung in einem Kraftfahrzeug als Audiosignalquelle erläutert. In der Figur 1 ist ein Autoradio 1 über eine erste Signalleitung 2 und eine zweite Signalleitung 3 mit einem Lautsprecher 4 verbunden. In die Signalleitungen 2, 3 sind zwischen dem Autoradio 1 und dem Lautsprecher 4 eine erste Frequenzweiche 5 und eine zweite Frequenzweiche 6 in die Signalleitungen 2, 3 eingeschaltet, so dass die Signalleitungen 2, 3 jeweils hinein und wieder aus den Frequenzweichen 5, 6 hinausführen. Die erste Frequenzweiche 5 führt über Signalleitungen 7 zu einer ersten Steuervorrichtung 8, die wiederum mit einem Fensterheber 9 verbunden ist. Die zweite Frequenzweiche 6 ist über Signalleitungen 10 mit einer zweiten Steuervorrichtung 11 und diese wiederum mit einer Türschließvorrichtung 12 verbunden. In dem Autoradio 1 ist eine Tunervorrichtung 13 angeordnet, die ein über eine Antenne 14 empfangenes Funksignal in ein Audiosignal umwandelt. Von der Tunervorrichtung 13 wird das Audiosignal über interne Signalleitungen 2', 3' zu einer dritten Frequenzweiche 15 geführt, die mit der ersten Signalleitung 2 und der zweiten Signalleitung 3 verbunden ist. Eine Verstärkereinrichtung zu Verstärkung des aus dem von der Antenne 14 gewonnen elektrischen Signals ist in die Tunervorrichtung 13 integriert. In dem Autoradio 1 ist ferner eine Rechenvorrichtung 16 angeordnet, die mit der dritten Frequenzweiche 15 verbunden ist und von der aus ein Steuersignal über die dritte Frequenzweiche 15 auf die erste Signalleitung 2 und die zweite Signalleitung 3 gebbar ist. Die dritte Frequenzweiche 15 sowie die Rechenvorrichtung 16 ist mit einer Ansteuereinheit 17 verbunden, die außerhalb des Autoradios im Fahrzeug angeordnet ist. Von der Ansteuereinheit 17 ist ebenfalls ein Ansteuersignal auf die erste Signalleitung 2 und die zweite Signalleitung 3 gebbar. Ferner ist die Rechenvorrichtung 16 ebenfalls von der Ansteuereinheit 17 ansteuerbar. In einem bevorzugten Ausführungsbeispiel sind an der Ansteuereinheit 17 Bedieneinheiten zur Bedienung des Fensterhebers 9 und/oder der Türschließvorrichtung 12 angeordnet. Die Bedieneinheiten können z.B. ein Türschloß, ein Funkempfänger für einen schlüssellosen Fahrzeugzugang, eine Fahrzeugalarmanlage oder ein im Fahrzeug angeordneter Bedienknopf sein. Ferner sind an dem Autoradio 1 Bedienelemente 18 angeordnet, die einerseits zur Bedienung des Autoradios dienen, die jedoch andererseits auch zur Bedienung des Fensterhebers 9 und/oder der Türschließvorrichtung 12 verwendet werden können. In einer Anzeige 19 des Autoradios 1, die vorzugsweise als eine Flüssigkristallanzeige ausgeführt ist, werden Informationen über die Frequenz eines mit dem Radio wiedergegebenen Rundfunksenders und/oder eine eingestellte Lautstärke des Autoradios angezeigt. Ferner erfolgt über die Anzeige 19 auch eine Rückkopplung der über die z.B. als Drehgeber ausgeführten Bedienelemente 18 erfolgte Bedienung des Fensterhebers 9 und/oder der Türschließvorrichtung 12.

Neben den angeführten Ausführungsbeispielen des Fensterhebers 9 und der Türschließvorrichtung 12 sind beliebige elektrische Vorrichtungen im Fahrzeug über die Signalleitungen 2, 3 ansteuerbar, bevorzugt jedoch nur elektrische Vorrichtungen, die für die Fahrsicherheit des Fahrzeugs nicht hoch relevant sind. Neben dem gezeigten Ausführungsbeispiel können weitere elektrische Vorrichtungen mittels einer Frequenzweiche in die Signalleitungen 2, 3 hineingeschaltet werden. Somit ist die Ansteuerung laufend erweiterbar, ohne dass neue Leitungen im Fahrzeug verlegt werden müssen.

In einem bevorzugten Ausführungsbeispiel sind die Frequenzweichen 5, 6 als ein Bandpass, als ein Hochpass oder als ein Tiefpass aufgeführt. Durch die Festlegung bestimmter Frequenzbereiche zur Ansteuerung der angeschlossenen elektrischen Geräte, z.B. des Fensterhebers 9 bzw. der Türschließvorrichtung 12, können für die einzelnen elektrischen Geräte unterschiedliche Frequenzbereiche festgelegt werden. Die Frequenzbereiche liegen dabei vorzugsweise in einem im allgemeinen für das menschliche Gehör nicht hörbaren Bereich, so dass das Audiosignal, das auf die Signalleitungen 2, 3 zu dem Lautsprecher 4 gegeben wird, unverändert ausgegeben werden kann, ohne dass ein Steuersignal für einen Benutzer hörbar ist. In einem bevorzugten Ausführungsbeispiel können auch Lautsprecher verwendet werden, die nicht zu einer Audiowiedergabe in dem Frequenzbereich des Steuersignals geeignet sind, so dass die Steuerfrequenz nicht ausgegeben wird. Um komplexere Ansteuerungssignale übertragen zu können, kann auf das übertragene Signal in einem geeigneten Frequenzbereich auch ein komplexeres Steuersignal mittels eines Modulators, der vorzugsweise ebenfalls in dem Autoradio 1 angeordnet ist, auf die Signalleitungen 2, 3 aufmoduliert werden. Anstelle der Frequenzweichen 5, 6 wird jeweils ein Demodulator in die Signalleitungen 2, 3 eingeschaltet, der in gleicher Weise ein Signal an eine Steuervorrichtung weiterleitet. Die Signalleitungen 2, 3 sind vorzugsweise als abgeschirmte Signalleitungen, so z.B. als ein Koaxialkabel bzw. als eine Zweidrahtleitung mit einem definierten Abstand der beiden Leiter ausgeführt. Dadurch wird eine Beeinflussung der Umgebung insbesondere durch bei der Übertragung hoher Frequenzen vermieden.

Der Lautsprecher 4 ist in einem bevorzugten Ausführungsbeispiel in einer Fahrzeugtüre angeordnet. Ferner ist die Verwendung einer Vielzahl von Lautsprechern möglich, so z.B. für eine Stereowiedergabe. Hierdurch können Ansteuervorrichtungen z.B. in einer linken und in einer rechten Fahrzeugtüre getrennt beeinflusst werden, je nach dem auf welchen Stereokanal ein entsprechendes Steuersignal gegeben wird. Ferner kann jedoch auch für einen Befehl, alle Fahrzeugtüren und Fahrzeugfenster sofort zu schließen, über alle Audiokanäle das gleiche Signal zur Ansteuerung ausgegeben werden. Mittels Signalleitungen, die zu in der Hutablage des Fahrzeugs angeordneten Lautsprechern führen, kann auch eine Datenverbindung zu einem Kofferraum eines Fahrzeugs und damit auch zu an der Rückwand des Fahrzeugs angeordneten Ansteuervorrichtungen erfolgen erfolgen.

Eine Ansteuerung der elektrischen Geräte erfolgt dabei in der Weise, dass ein Benutzer über die Bedienelemente 18 entsprechend einer in einer Anzeige dargestellten Auswahl eine Bedienung. Im Folgenden ist dies anhand einer Bedienung des Fensterhebers 9 erläutert. Ein Benutzer gibt über die Bedienelemente 18 den Befehl ein, das Fenster auf der Fahrerseite zu öffnen. Alternativ hierzu ist eine Bedienung über ein an der Ansteuereinheit 17 angeordnetes Bedienelement möglich, z.B. eine Drucktaste. Ein Ansteuersignal wird nun entweder von der Ansteuereinheit 17 bzw. der Rechenvorrichtung 16 erzeugt und mittels der dritten Frequenzweiche 15 auf die Signalleitungen 2, 3 zu dem in der Tunervorrichtung 13 erzeugten Audiosignal gegeben. Gemeinsam werden beide Signale über die Signalleitungen 2, 3 bis zu der erste Frequenzweiche 5 transportiert. Die zweite Frequenzweiche 6 passieren beide Signale dabei unverändert und ohne dass ein Signal ausgekoppelt wird, da sich die zweite Frequenzweiche 6 auf einen anderen Frequenzbereich als der für die Ansteuerung des Fensterhebers 9 festgelegten Frequenzbereich bezieht. Von der ersten Frequenzweiche 5 wird das Steuersignal von den Signalleitungen 2, 3 abgegriffen und über die Signalleitungen 7 zu der ersten Steuervorrichtung 8 geleitet. In Abhängigkeit von dem empfangenen Datensignal legt die erste Steuervorrichtung 8 eine Ansteuerung des als Elektromotor ausgeführten Fensterhebers 9 fest. Für einen vorgegebenen Zeitraum wird nun der Motor des Fensterhebers 9 aktiviert und transportiert die Scheibe auf der Fahrerseite in eine vorzugsweise in der ersten Steuervorrichtung 8 festgelegte Position. In einem bevorzugten Ausführungsbeispiel gibt die erste Steuervorrichtung 8 eine Rückmeldung über den erfolgreich durchgeführten Befehl bzw. eine Fehlermeldung über die Signalleitungen 2, 3 an das Autoradio 1 zurück, wobei die Fehlermeldung gegebenenfalls in der Anzeige 19 dargestellt wird. Das Audiosignal wird währenddessen über den Lautsprecher 4 ausgegeben.

In einem in der Figur 1 nicht dargestellten Ausführungsbeispiel kann die dritte Frequenzweiche 15 auch außerhalb des Autoradios 1 angeordnet sein, so dass Steuersignale nicht innerhalb des Autoradios 1, sondern erst außerhalb des Autoradios 1 auf die Signalleitungen 2, 3 gegeben werden. Zusätzlich können innerhalb des Autoradios 1 Steuersignale z.B. von der Rechenvorrichtung 16 auf die Signalleitungen 2, 3 gegeben werden. Jedoch kann das Autoradio auch als reine Audiosignalquelle verwendet werden.

## Patentansprüche

1. Verfahren zur Datenübertragung in einem Fahrzeug, wobei Audiosignale von einer Audiosignalquelle zu einem Lautsprecher über eine Signalleitung für Audiosignale übertragen werden und wobei ein Datensignal zur Ansteuerung einer elektrischen Vorrichtung auf die Signalleitung für Audiosignale gegeben wird.

2. Verfahren nach Anspruch 1, **dadurch gekennzeichnet, dass** das Datensignal zusätzlich zu dem Audiosignal auf die Signalleitung gegeben wird.

3. Verfahren nach einem der vorhergehenden Ansprüche, **dadurch gekennzeichnet, dass** das Datensignal mittels einer Frequenzweiche auf die Signalleitung gegeben wird und dass das Datensignal mit einer Frequenzweiche von der Signalleitung zu der elektrischen Vorrichtung abgegriffen wird.

4. Verfahren nach einem der vorhergehenden Ansprüche, **dadurch gekennzeichnet, dass** das Datensignal in einem Frequenzbereich unter 100 Hz oder in einem Frequenzbereich über 40 kHz übertragen wird.

5. Verfahren nach einem der vorhergehenden Ansprüche, **dadurch gekennzeichnet, dass** das Datensignal von der Audiosignalquelle erzeugt wird.

6. Vorrichtung zur Datenübertragung in einem Fahrzeug, mit einer Audiosignalquelle und mit einer eine Signalleitung für Audiosignale von der Audiosignalquelle zu einem Lautsprecher, wobei ein Datensignal zur Ansteuerung einer elektrischen Vorrichtung auf die Signalleitung für Audiosignale gegeben wird.

7. Vorrichtung nach Anspruch 6, **dadurch gekennzeichnet, dass** die Signalleitung (2, 3) für Audiosignale mindestens zweipolig und abgeschirmt ist.

8. Vorrichtung nach einem der Ansprüche 6-7, **dadurch gekennzeichnet, dass** der Lautsprecher (4) in einer Fahrzeugtüre oder einer Hutablage angeordnet ist.

9. Vorrichtung nach einem der Ansprüche 6-8, **dadurch gekennzeichnet, dass** die elektrische Vorrichtung ein Fensterheber (9) oder eine Türschließvorrichtung (12) ist.

10. Vorrichtung nach einem der Ansprüche 6-9, **dadurch gekennzeichnet, dass** an der Audiosignalquelle (1) ein Bedienelement (18) angeordnet ist und dass die elektrische Vorrichtung über das an der Audiosignalquelle (1) angeordnete Bedienelement (18) steuerbar ist.

11. Verwendung der Vorrichtung nach einem der vorhergehenden Ansprüche 6-10 mit einem Autoradio als eine Audiosignalquelle.

## Claims

1. Method for data transmission in a vehicle, where audio signals are transmitted from an audio signal source to a loudspeaker via a signal line for audio signals and where a data signal for actuating an electrical apparatus is put onto the signal line for audio signals.

2. Method according to Claim 1, **characterized in that** the data signal is put onto the signal line in addition to the audio signal.

3. Method according to one of the preceding claims, **characterized in that** the data signal is put onto the signal line by means of a frequency splitter and **in that** the data signal is tapped off from the signal line to the electrical apparatus using a frequency splitter.

4. Method according to one of the preceding claims, **characterized in that** the data signal is transmitted in a frequency range below 100 Hz or in a frequency range above 40 kHz.

5. Method according to one of the preceding claims, **characterized in that** the data signal is produced by the audio signal source.

6. Apparatus for data transmission in a vehicle, having an audio signal source and having a signal line for audio signals from the audio signal source to a loudspeaker, where a data signal for actuating an electrical apparatus is put onto the signal line for audio signals.

7. Apparatus according to Claim 6, **characterized in that** the signal line (2, 3) for audio signals has at least two poles and is screened.

8. Apparatus according to either of Claims 6 and 7, **characterized in that** the loudspeaker (4) is arranged in a vehicle door or a parcel shelf.

9. Apparatus according to one of Claims 6-8, **characterized in that** the electrical apparatus is a window lift (9) or a door-closing apparatus (12).

10. Apparatus according to one of Claims 6-9, **characterized in that** the audio signal source (1) has a control element (18) arranged on it and **in that** the electrical apparatus can be controlled using the control element (18) arranged on the audio signal source (1).

11. Use of the apparatus according to one of the preceding claims 6-10 with a car radio as an audio signal source.

## Revendications

1. Procédé de transmission de données dans un véhicule selon lequel les signaux audio sont transmis d'une source de signaux audio vers un haut-parleur par une ligne de transmission de signaux audio et un signal de données est fourni pour commander un dispositif électrique par la ligne de signaux audio.

2. Procédé selon la revendication 1,
**caractérisé en ce que**
les signaux de données sont fournis en plus des signaux audio dans la ligne de signaux.

3. Procédé selon l'une des revendications précédentes,
**caractérisé en ce que**
le signal de données est fourni à la ligne de signaux par l'intermédiaire d'un aiguillage de fréquence et le signal de données est détecté à partir d'un aiguillage de fréquence de la ligne de signaux vers le dispositif électrique.

4. Procédé selon l'une des revendications précédentes,
**caractérisé en ce que**
le signal de données est transmis dans une plage de fréquence inférieure à 100 Hz ou dans une zone de fréquence supérieure à 40 kHz.

5. Procédé selon l'une quelconque des revendications précédentes,
**caractérisé en ce que**
le signal de données est généré par la source de signaux audio.

6. Dispositif de transmission de données dans un véhicule comportant une source de signaux audio et une ligne de signaux pour les signaux audio entre la source de signaux audio et un haut-parleur, un signal de données étant fourni pour commander un dispositif électrique par la ligne de signaux audio.

7. Dispositif selon la revendication 6,
**caractérisé en ce que**
la ligne de signaux (2, 3) pour les signaux audio est au moins bipolaire et blindée.

8. Dispositif selon l'une des revendications 6-7,
**caractérisé en ce que**
le haut parleur (4) est installé dans une portière du véhicule ou dans la plage arrière.

9. Dispositif selon l'une des revendications 6-8,
**caractérisé en ce que**
le dispositif électrique est un lève-glace (9) ou un dispositif ferme-porte (12).

10. Dispositif selon l'une des revendications 6-9,
**caractérisé par**
un élément de manoeuvre (18) équipant la source de signaux audio (1) et le dispositif électrique se commande par l'élément de manoeuvre (18) équipant la source de signaux audio (1).

11. Application du dispositif selon l'une des revendications 6 à 10 à un autoradio équipé d'une source de signaux audio.
